# EUROPÄISCHE PATENTSCHRIFT

(11) **EP 1 734 626 B1**
(45) Veröffentlichungstag und Bekanntmachung des Hinweises auf die Patenterteilung: **02.09.2009**
(21) Anmeldenummer: 05014516.8
(22) Anmeldetag: 05.07.2005
(51) Int. Cl.: H02G 3/04

(54) **Kabelkanal**
Cableduct
Canalisation pour câble

(30) Priorität: 14.06.2005 EP 05012723
(43) Veröffentlichungstag der Anmeldung: 20.12.2006
(73) Patentinhaber: Proverum AG, 6341 Baar (CH)
(72) Erfinder: Mühlebach, Moritz, 8305 Dietlikon (CH)
(74) Vertreter: Gesthuysen, von Rohr & Eggert

(56) Entgegenhaltungen:
- EP-A- 0 803 619
- EP-A- 1 217 277
- AT-U1- 6 495
- DE-A1- 2 408 095
- DE-A1- 2 415 768
- DE-A1- 10 237 074
- DE-A1- 19 917 913
- DE-U- 1 886 314
- DE-U1- 29 814 309
- GB-A- 919 515
- GB-A- 1 465 578

## Beschreibung

Die Erfindung betrifft einen Kabelkanal nach dem Oberbegriff des Anspruchs 1.

Aus der DE 18 86 314 U ist ein gattungsgemäßer Kabelkanal bekannt, der zur Montage mit der Wand verschraubt wird. Problematisch ist, daß es beim Verschrauben zu einem Verkratzen des Kabelkanals kommen kann. Nachteilig ist außerdem, daß die Schraubverbindung von außen sichtbar ist. Ein weiterer wesentlicher Nachteil besteht darin, daß ein Lösen der Schraubverbindung zur Demontage des Kabelkanals aufwendig ist.

Die Druckschrift EP-A-0 803 619 betrifft eine einen als Dekorstreifen ausgebildeten Deckel aufweisenden Wandanschlußprofilschiene, die mittels Nägeln oder Schrauben an einer Wand zu befestigen ist.

Die Druckschrift DE 102 37 074 A1 betrifft einen Bausatz für eine Wandabschlußleiste mit einem als Schichtstoffstreifen ausgebildeten Deckel, wobei jedoch ein Clip zur Wandmontage nicht vorgesehen ist.

Das Dokument DE 199 17 913 A1 betritt einen Bodenkanal, der bei der Montage am Boden wandnah befestigt wird. Der Bodenkanal weist einen abnehmbaren Deckel auf. Offensichtlich wird der Kanal hierzu mit der Wand verschraubt.

Das Dokument AT 006 495 U1 betrifft eine Sockelleiste, die eine flache Wandung zur Montage an der Wand aufweist. Es sind weder ein Clip noch eine Schenkelaufnahme vorgesehen.

Das Dokument DE 298 14 309 U1 betrifft eine Profilleiste samt Zubehör. Die bekannte Profilleiste weist zur Wandbefestigung Bohrungen auf, die zur Verschraubung der Profilleiste mit der Wand vorgesehen sind.

Das Dokument EP-A-1 217 277 betrifft einen Installationskanal für die Verlegung von Leitungen, wobei der Installationskanal mit der Wand verschraubt ist.

Das Dokument GB 919,515 A betrifft eine Randabschlußleiste, deren oberer Bereich zur Aufnahme von Kabeln ausgebildet ist. Hierzu ist der obere Bereich der Randabschlußleiste hakenförmig gebogen und besteht aus einem flexiblen Material, so daß dieser Bereich aufgebogen werden kann, um die Kabel darin anzuordnen. Bei einer Ausführungsform sind zur Wandmontage eine Mehrzahl von Clips vorgesehen. Die einzelnen Clips weisen eine oberen abgebogenen Abschnitt und an ihrem unteren Ende einen hakenförmigen Abschnitt auf. Zur Befestigung wird die Abschlußleiste auf den oberen Schenkel des Clips aufgesetzt. Aufgrund der Elastizität des Materials der Abschlußleiste und bei entsprechender Druckausübung auf die Randabschlußleiste und deren Biegung kann ein hinterer Flanschabschnitt der Profilleiste den unteren Haken des Clips hintergreifen.

Die Druckschrift DE 24 15 768 A1 betrifft ein Unterputzsystem für Schwach- und Starkstromleitungen. Die Befestigung des Systems an der Wand erfolgt vorzugsweise mittels Eingipsen. Hierzu sind entsprechende Verzahnungsausformungen am Gehäuse des Systems vorgesehen.

Das Dokument DE 24 08 095 A1 betrifft einen Kabelverlegungskanal, der zur Befestigung mit der Wand verschraubt wird.

Das Dokument GB-A-1 465 578 betrifft einen Kabelkanal, der über einen Metallbügel mit der Wand verschraubt ist.

Aufgabe der vorliegenden Erfindung ist es nun, einen Kabelkanal zur Verfugung zustellen, der in einfacher Weise montiert und demontiert werden kann.

Zur Lösung der vorgenannten Aufgabe ist ein Kabelkanal gemäß Anspruch 1 vorgesehen.

Die Wandmontage erfolgt bei der Erfindung über eine Verrastung. Eine andere Möglichkeit der Wandmontage besteht über eine Verrastung. Hierzu ist dem Kabelkanal wenigstens ein Clip zur Wandmontage zugeordnet. Der Clip hat dabei eine im wesentlichen L-förmige Ausbildung. Dabei wird der vertikal verlaufende Clip-Schenkel an der Wand montiert, während der horizontale Schenkel zur Verbindung mit dem Kabelkanal dient. Die Clipausbildung ist vorzugsweise derart, daß der Clip am oberen Ende seines vertikal ausgerichteten Schenkels einen von der Wand weg gebogenen Abschnitt aufweist, während rückseitig an der Kabelaufnahme eine entsprechende Schenkelaufnahme vorgesehen ist, so daß der Kabelkanal auf den Abschnitt des an der Wand montierten Clips aufgesetzt werden kann. Unterhalb des Kabelaufnahmegehäuses ist eine im wesentlichen horizontale, rückseitig offene Aufnahme für den horizontal ausgerichteten Schenkel des L-förmigen Clips vorgesehen. Im übrigen weist der Clip am horizontalen Schenkel einen Federvorsprung auf.

In diesem Zusammenhang bietet es sich im übrigen an, wenn in der Aufnahme ein korrespondierender Rastvorsprung vorgesehen ist. Letztlich ergibt sich durch die Halterung des Kabelaufnahmegehäuses am oberen Ende des Clips und über den Federvorsprung am horizontalen Schenkel, eine sichere, aber letztlich auch einfach wieder lösbare Verbindung des Kabelkanals mit der Wand.

Im übrigen ist es günstig, daß oberhalb der Ausnahme ein rückwärtig abstehender Schenkel vorgesehen ist, und daß zwischen dem Schenkel und der oberen Schenkelaufnahme für den Clip ein Klebstoffaufnahmebereich ausgebildet ist. Auf diesen Klebstoffäufnahmebereich, der durch die Schenkelaufnahme und den vorgenannten Schenkel, die nur eine Höhe von wenigen Millimetern haben, gebildet wird, kann Klebstoff aufgetragen werden, so daß der erfindungsgemäße Kabelkanal auch ohne weiteres an die Wand geklebt werden kann.

Um die Erstmontage des erfindungsgemäßen Kabelkanals zu vereinfachen und um einen sauberen, bündigen Abschluß zu erzielen, weist der untere Abschlußabschnitt eine Dichtlippe zur Auflage auf den Boden auf. Zur Befestigung der Dichtlippe ist am unteren Anschlagabschnitt eine längslaufende Nut zum Einstecken eines Halteabschnitts der Dichtlippe vorgesehen. Die Nut ist dabei derart ausgebildet, daß der Halteabschnitt quer zur Längsrichtung der Nut und damit von unten her eingesteckt werden kann und letztlich nicht in Längsrichtung der Nut eingeschoben werden muß.

Bei der erfindungsgemäßen Konstruktion ist es vorzugsweise vorgesehen, daß der Bereich hinter dem Anschlagabschnitt vom Innenraum durch wenigstens eine Wandung nach oben separiert ist. Durch die Abtrennung nach oben hin und den unteren Anschlagabschnitt nach vorne hin ergibt sich ein weiterer Kabelaufnahmeraum, in den ergänzend zum Innenraum Kabel eingebracht werden können.

Der erfindungsgemäße Kabelkanal kann grundsätzlich über verschiedene Arten an der Wand befestigt werden. Eine Möglichkeit besteht darin, den Kabelkanal mit der Wand zu verschrauben. In diesem Zusammenhang bietet es sich an, wenn die vorderseitige Wandung des Kabelaufnahmegehäuses bereichsweise verdickte Abschnitte aufweist, so daß nach dem Durchbohren dieser Wandung problemlos die Verwendung einer Senkkopfschraube möglich ist. Grundsätzlich ist es auch möglich, daß an der vorderen Seitenwandung bereits entsprechende Bohrungen vorgesehen sind, die dann über entsprechende Abdeckungen abgedeckt sind.

Um an Eckbereichen einen sauberen Übergang zwischen zwei winkelig verlaufenden Kabelkanalabschnitten zu erreichen, ist wenigstens ein Eckstück vorgesehen. Das Eckstück weist einen im montierten Zustand senkrecht angeordnete Eckkörper auf, der zwei winkelig zueinander stehende vorderseitige Abdeckungen und eine dem Winkel der betreffenden Wand angepaßte winkelige obere Abdeckplatte aufweist. Insgesamt ist das Eckstück dabei derart ausgebildet, daß im montierten Zustand die vorderseitigen Abdeckungen die Randkanten der vorderen Seitenwandungen der angrenzenden Kabelaufnahmegehäuse überdecken, während die obere Abdeckplatte oberseitig die benachbarten Kabelaufnahmegehäuse überdeckt. Durch das in dieser Weise ausgebildete Eckstück sind damit die üblicherweise auf Gehrung geschnittenen Randkanten der aneinander anliegenden und winkelförmig angeordneten Kabelkanalbereiche überdeckt, so daß etwa unsaubere Schnittkanten nicht sichtbar sind.

Um eine sichere Halterung des Eckstücks am an der Wand üblicherweise befestigten Kabelkanal zu erhalten, ist am Eckstück wenigstens ein Schenkel zum Eingreifen in den Kabelkanal und Halten des Eckstücks am Kabelkanal vorgesehen.

Im Hinblick darauf, daß das Eckstück die benachbarten Kabelkanalabschnitte sowohl vorderseitig als auch oberseitig überdeckt, ist an der Verbindungsstelle zwischen der oberen Abdeckplatte und dem Eckkörper eine Sollbruchstelle vorgesehen. Durch die Sollbruchstelle ist es möglich, den Deckel des Kabelkanal, der von der oberen Abdeckplatte endseitig übergriffen wird, abzunehmen, ohne daß es einer kompletten Demontage des Eckstück bedarf. Bei entsprechender Kraftausübung beim Abnehmen des Deckels bricht die obere Abdeckplatte an der Sollbruchstelle ab, so daß der Deckel dann abgenommen werden kann.

Damit nach dem Abbrechen der oberen Abdeckplatte von dem Eckkörper das Eckstück weiter verwendbar ist, also ein neues Eckstück nicht notwendig ist, ist an einem Ende der Abdeckplatte unterseitig ein Schlitz zur Aufnahme des Endes eines Deckels vorgesehen, während das andere Ende schlitzfrei ausgebildet ist.

Der Schlitz wird dabei durch die Unterseite der Abdeckplatte und einen separaten Schenkel, der an der Unterseite der Abdeckplatte vorgesehen ist, realisiert.

Es versteht sich, daß es alternativ auch möglich ist, das Eckstück von vornherein mehrteilig auszubilden, und dabei einen separaten Eckkörper und eine separate Abdeckplatte vorzusehen.

Weitere Merkmale und Vorteile der vorliegenden Erfindung ergeben sich aus der nachfolgenden Beschreibung eines Ausführungsbeispiels anhand der Zeichnung. Dabei zeigt
- Fig. 1: eine Querschnittsansicht eines erfindungsgemäßen Kabelkanals,
- Fig. 2: eine vergrößerte Detaildarstellung des Kabelkanals aus Fig. 1,
- Fig. 3: eine Unteransicht eines Kabelausgangsstücks für einen erfindungsgemäßen Kabelkanal,
- Fig. 4: eine Seitenansicht des Kabelausgangsstücks aus Fig. 3,
- Fig. 5: eine Seitenansicht eines Eckstücks,
- Fig. 6: eine Schnittansicht eines Kabelkanals mit eingesetztem Eckstück und
- Fig. 7: eine Schnittansicht entlang der Schnittlinie VII-VII aus Fig. 5.

In den Fig, 1 und 2 ist ein Kabelkanal 1 zur Wandmontage dargestellt. Der Kabelkanal 1 weist einen Kabelaufnahmebereich 2 und einen unteren Abschlußabschnitt 3 auf Der Abschlußabschnitt 3 ist zur Anordnung und Auflage am Boden und zum Abdecken von Randkanten von nicht dargestellten Bodenbelägen vorgesehen.

Vorgesehen ist nun, daß der Kabelaufnahmebereich 2 ein im montierten Zustand an der Wand angebrachtes Kabelaufnahmegehäuse 4 und einen abnehmbaren Deckel 5 aufweist, wobei im abgenommenen Zustand des Deckels der Zugang zum Innenraum 6 des Kabelaufnahmegehäuses 4 gegeben ist. Der untere Abschlußabschnitt 3 ist fest mit dem Kabelaufnahmegehäuse 4 verbunden mit der Folge, daß der untere Abschlußabschnitt 3 auch bei abgenommenem Deckel 5 im montierten Zustand des Kabelkanals 1 in fester Anordnung zum Boden verbleibt. Die An- bzw. Zuordnung des Abschlußabschnittes 3 zum Boden ist damit unabhängig davon, ob der Deckel 5 aufgesetzt ist oder nicht.

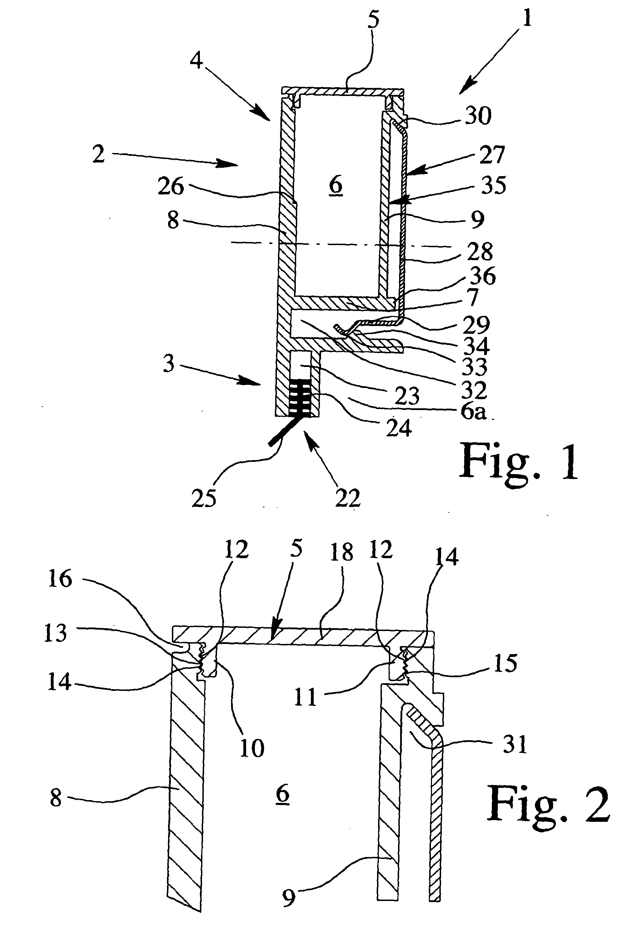

Aus Fig. 1 ergibt sich, daß das Kabelaufnahmegehäuse 4 im Querschnitt U-förmig ausgebildet ist und einen Boden 7, eine vordere Seitenwand 8 und eine hintere Seitenwand 9 aufweist. Die beiden Seitenwände 8, 9 haben jeweils die gleiche Höhe und bestimmen damit die Höhe des Innenraums 6 des Kabelaufnuhmegehäuses 4. Der Deckel 5 ist vorliegend an der Oberseite des Kabelaufnahmegehäuses 4 vorgesehen. Der Deckel 5 bildet den oberen Abschluß und damit die abnehmbare obere Wandung des Kabelaufnahmegehäuses 4. Grundsätzlich wäre es auch möglich, daß der Deckel 5 nicht nur oberseitig angeordnet ist, sondern auch einen Teil der vorderen Seitenwand 4 erfaßt oder aber, daß das Kabelaufnahmegehäuse 4 eine feste obere Wandung aufweist und der Deckel dann nur im Bereich der vorderen Seitenwand 4 vorgesehen ist .

Das gesamte Volumen des Innenraums 6 steht der Anordnung und Aufnahme von Kabeln zur Verfügung. Befestigungsmittel, wie beispielsweise Clips oder dergleichen, oder aber einzelne Fächer zur Anordnung und Befestigung einzelner Kabel sind nicht notwendigerweise vorgesehen.

Zur Verbindung des abnehmbaren Deckels 5 mit dem Kabelaufnahmegehäuse 4 dient eine Rastverbindung. Hierzu weist der Deckel 5 auf gegenüberliegenden Längsseiten 2 in den Innenraum 6 des Kabelaufnahmegehäuses 4 ragende Schenkel 10, 11 mit Rastvorsprüngen 12 auf Die beiden Schenkel 10, 11 laufen parallel zueinander in Längsrichtung des Kabelkanals 1. Am Kabelaufnahmegehäuse 4 sind an gegenüberliegenden Seiten Rastbereiche 13, 14 mit längslaufenden korrespondierenden Rastvorsprüngen 15 vorgesehen. An jedem Schenkel 10, 11 und an jedem Rastbereich 13, 14 sind eine Mehrzahl von Rastvorsprüngen 12, 15 vorgesehen. Die Rastvorsprüngen sind sägezahnartig angeordnet, wobei die die Rastvorsprünge 12 aufweisenden Schenkel 10, 11 im Bereich der Rastvorsprünge 12 ballig bzw. gerundet ausgebildet sind.

Wie sich aus den Fig. 1 und 2 ergibt, befindet sich vorderseitig zwischen dem Kabelaufhahmegehäuse 4 und dem Deckel 5 eine Fuge 16, die den Eingriff eines Werkzeugs ermöglicht, um den Deckel 5 in einfacher Weise abnehmen zu können.

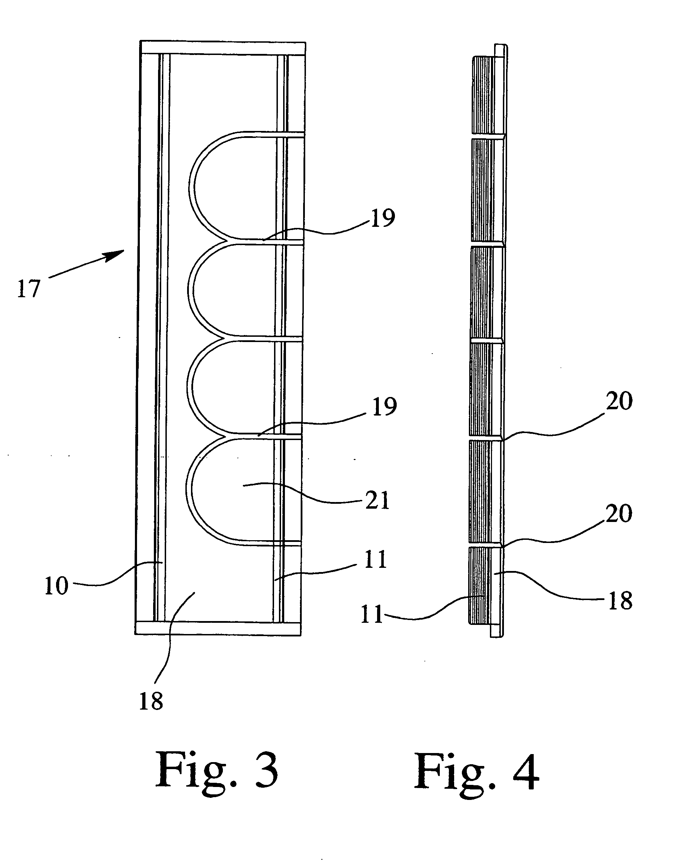

In den Fig. 3 und 4 ist ein Kabelausgangsstück 17 vorgesehen. Das Kabelausgangsstück 17 weist den gleichen Grundaufbau wie der Deckel 5 auf, nämlich eine obere Platte 18 und die beiden längslaufenden Schenkel 10, 11 mit den Rastvorsprüngen 12. Insgesamt weist die Platte 18 eine geschlossene Oberseite auf. Unterseitig sind an der Platte 18 eine Mehrzahl von bogenförmigen Nuten vorgesehen, wobei die Nuten 19 zu Materialverdünnungen 20 in der Platte 18 fuhren. Durch die Nuten 19 und die Materialverdünnungen 20 ergeben sich vorgegeben Kabelöffnungen. Die Kabelöffnungen werden durch Herausbrechen der von den Nuten 19 eingegrenzten Plattenabschnitte 21 gebildet. Im dargestellten Ausführungsbeispiel erstrecken sich die Abschnitte 21 bis über den Schenkel 11 hinaus. Die Nuten 19 sind also seitlich herausgeführt, was ein manuelles Herausbrechen eines Abschnitts 21 erleichtert.

Am unteren Anschlagabschnitt 3 befindet sich eine Dichtlippe 22. Der untere Anschlagabschnitt 3 weist eine längslaufende Nut 23 auf, in die ein Halteabschnitt 24 der Dichtlippe 22 eingesteckt ist. Von der Dichtlippe 22 ragt nur die äußere Dichtzunge 25 aus der Nut 23 heraus.

An der vorderen Seitenwand 8 ist das Kabelaukahmegehäuse 4 bereichsweise, nämlich im unteren Bereich verdickt, um nach dem Durchbohren eine Senkkopfschraube verwenden zu können. In Fig. 1 ist dies durch eine innenseitige Stufe 26 im Innenraum 6 erkennbar.

Im übrigen ist dem Kabelkanal 1 wenigstens ein Clip 27 zur Wandmontage zugeordnet. Der Clip 27 hat eine etwa L-förmige Ausbildung mit einem vertikal verlaufenden Schenkel 28 und einem horizontal verlaufenden Schenkel 29. An seinem oberen Ende weist der vertikale Schenkel 28 einen von der Wand weggebogenen Abschnitt 30 auf, während rückseitig am Kabelaufnahmegehäuse 4 eine entsprechende Schenkelaufnahme 31 vorgesehen ist, in die der Abschnitt 30 einsetzbar ist. Unterhalb des Kabelaufnahmegehäuses 4 befindet sich eine im wesentlichen, horizontal ausgerichtete, rückseitig offene Aufnahme 32 für den horizontalen Schenkel 29 des Clips 27. Am horizontalen Schenkel 29 ist ein Federvorsprung 33 vorgesehen, der mit einem korrespondierenden Rastvorsprung 34 in der Aufnahme 32 zusammenwirkt.

Oberhalb der Aufnahme 32 befindet sich ein Klebstoffaufnahmebereich 35, der letztlich von der Außenseite der hinteren Seitenwand 9 gebildet wird. Nach oben und nach unten hin ist der Klebstoffaufnahmebereich 35 abgegrenzt, nämlich zum einen durch die Schenkelaufnahme 31 und zum anderen durch einen oberhalb der Aufnahme 32 vorgesehenen Schenkel 36.

Die dargestellte Ausbildung ermöglicht es, den Kabelkanal an eine Wand anzuschrauben, unter Zuhilfenahme von Clips 27 zu verrasten oder aber mit der Wand über auf den Klebstoffaufnahmebereich 35 aufgetragenen Klebstoff anzukleben.

Unterhalb der Aufnahme 32 und hinter dem unteren Anschlagabschnitt 3 befindet sich ein vom Innenraum 6 separierter weiterer Kabelaufnahmeraum 6a, der ebenfalls zur Aufnahme von Kabeln vorgesehen ist. Der weitere Kabelaufnahmeraum 6a ist letztlich über die Dichtlippe 22 von außen her zugänglich. Nach unten hin wird der weitere Kabelaufnahmeraum 6a vom Untergrund begrenzt, während er nach hinten hin offen ist bzw, von der Wand begrenzt wird.

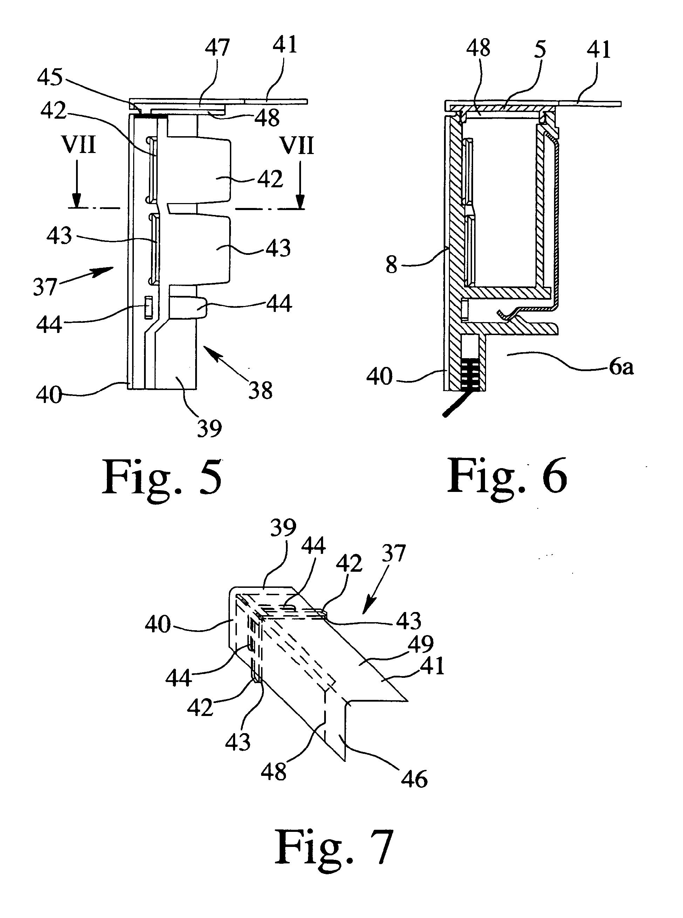

In den Fig. 5 bis 7 ist ein Eckstück 37 für den Kabelkanal 1 vorgesehen. Das Eckstück 37 weist einen im montierten Zustand senkrecht stehenden Eckkörper 38 auf, an dem zwei vorliegend im rechten Winkel zueinander angeordnete vorderseitige Abdeckungen 39, 40 vorgesehen sind. Des weiteren weist das Eckstück 37 eine obere winkelförmige Abdeckplatte 41 auf. Die Abdeckplatte 41 ist in Fig. 7 punktiert dargestellt. Die Abdeckplatte 41 hat vorder- und rückseitig eine Winkelform, die dem Winkel der Abdeckungen 39, 40 zueinander entspricht.

Wie sich aus Fig. 6 ergibt, übergreifen bzw. -decken die Abdeckungen 39, 40 stirn- bzw. endseitig im Bereich der Schnittkante die vordere Seitenwand 8, so daß sich ein sauberer Abschluß ergibt und der Gehrungsschnitt am Kabelkanalabschnitt nicht sichtbar ist. In gleicher Weise überdeckt die obere Abdeckplatte 41 den jeweiligen Deckel 5 im Bereich des Gehrungsschnittes. Die obere Abdeckplatte 41 liegt also endseitig auf dem jeweiligen Deckel 5 auf.

Zur Befestigung des Eckstücks 37 am Kabelkanal 1 sind am Eckstück 37 eine Mehrzahl von Schenkeln 42, 43, 44 vorgesehen, zwischen denen und der betreffenden Abdeckung 39, 40 jeweils ein Spalt für die vordere Seitenwand ausgebildet ist. Die Schenkel 42, 43 befinden sich dabei im Innenraum 6 des Kabelaufnahmegehäuses 4, während der Schenkel 44 in der Aufnahme 32 angeordnet ist.

Der Eckkörper 38 ist über eine Sollbruchstelle 45 mit der oberen Abdeckplatte 41 verbunden. Die Sollbruchstelle 45 ist dabei derart ausgelegt, daß bei Krafteinwirkung von unten nach oben, das heißt beim Anheben des Deckels 5, die obere Abdeckplatte 41 vom Eckkörper 38 abbricht.

Unterhalb der Abdeckplatte 41 befindet sich im Bereich des einen Abdeckbereichs 46 der Abdeckplatte 41 ein Schlitz 47. In den Schlitz 47 ist der Deckel 5 einsetzbar. Der Schlitz 47 wird gebildet zum einen durch die Abdeckplatte 41 selbst sowie einen unteren Schenkel 48. Der Schenkel 48 ist punktiert in Fig. 7 dargestellt. An dem anderen Abdeckbereich 49 der Abdeckplatte 41 befindet sich hingegen kein Schlitz und dementsprechend auch kein Schenkel 48. Durch die vorgenannte Konstruktion ist es selbst bei abgebrochener Abdeckplatte 41 möglich, die Abdeckplatte 41 noch sicher in ihrer Abdeckstellung zu halten, und zwar über die Anordnung des Deckels 5 im Schlitz 47.

Nicht dargestellt ist, daß das Eckstück grundsätzlich von vornherein auch mehrteilig, insbesondere zweiteilig ausgeführt sein kann und dabei zumindest einen Eckkörper und eine Abdeckplatte aufweist. Zum Abdecken wird die Abdeckplatte dann locker oder aber fest am Eckstück befestigt.

Das Einsetzen eines Kabels in den Kabelkanal 1 gestaltet sich sehr einfach. Hierzu wird der Kabelkanal 1 zunächst geöffnet. Dazu wird ein Werkzeug in die Fuge 16 eingesetzt und der Deckel 5 aufgehebelt. Anschließend kann von oben her ein Kabel in den Innenraum 6 des Kabelaufuahmegehäuses 4 eingelegt werden. Dann wird der Deckel 5 erneut aufgerastet. Das Kabelaufnahmegehäuse 4 und damit auch der Abschlußabschnitt 3 verbleiben während dessen ortsfest.

## Patentansprüche

1. Kabelkanal (1) zur Wandmontage mit einem Kabelaumahmcbereich (2) und einem unteren Abschlußabschnitt (3) zur Anordnung am Boden zum Abdecken von Randkanten von Bodenbelägen, wobei der Kabelaufixahrnebereich (2) ein im montierten Zustand an der Wand angebrachtes Kabelaufnahmegehäuse (4) und einen abnehmbaren Deckel (5) aufweist, wobei im abgenommenen Zustand des Deckels der Zugang zum Innenraum (6) des Kabelaufnahmegehäuses (4) gegeben ist, und wobei der untere Abschlußabschnitt (3) mit dem Kabelaufnahmegehäuse (4) fest verbunden ist, so daß der untere Abschlußabschnitt (3) auch bei abgenommenem Deckel (5) im montierten Zustand des Kabelkanal (1) in fester Anordnung zum Boden verbleibt, **dadurch gekennzeichnet, daß** den Kabelkanal (1) wenigstens ein im wesentlichen L-förmig ausgebildeter Clip zur Wandmontage zugeordnet ist, daß der Clip an seinem oberen Ende einen von der Wand abgebogenen Abschnitt (30) aufweist, daß rückseitig am Kabelaufnahmegehäuse eine entsprechende Schenkelaufnahme für den Abschnitt (30) vorgesehen ist, daß unterhalb des Kabelaufhahmebereichs (4) eine im wesentlichen horizontale, rückseitig offene Aufnahme (31) für den horizontalen Schenkel (29) des Clips (27) vorgesehen ist und daß der Clip am horizontalen Schenkel (29) einen Federvorsprung (33) aufweist.

2. Kabelkanal nach Anspruch 1, **dadurch gekennzeichnet, daß** in der Aufnahme (32) ein korrespondierender Rastvorsprung (34) vorgesehen ist.

3. Kabelkanal nach Anspruch 1 oder 2, **dadurch gekennzeichnet, daß** oberhalb der Aufnahme (32) ein rückwärtig abstehender Schenkel (36) vorgesehen ist und daß zwischen dem Schenkel (36) und der oberen Sehenkelaufnahme (31) ein Klebstoffaufnahmebereich (35) ausgebildet ist.

4. Kabelkanal nach einem der vorhergehenden Ansprüche, **dadurch gekennzeichnet, daß** der untere Anschlagabschnitt (3) eine Dichtlippe (22) aufweist und daß, vorzugsweise, der untere Anschlagabschnitt (3) eine längslaufende Nut (23) zum Einstecken eines Halteabschnitts (24) der Dichtlippe (22) aufweist.

5. Kabelkanal nach einem der vorhergehenden Ansprüche, **dadurch gekennzeichnet, daß** der Bereich hinter dem Anschlagabschnitt (3) vom Innenraum (6) separiert ist und daß dieser Bereich einen weiteren Kabelaufnahmeraum (6a) bildet.

6. Kabelkanal nach einem der vorhergehenden Ansprüche, **dadurch gekennzeichnet, daß** wenigstens ein vorzugsweise mehrteiliges Eckstück (37) zur Verbindung winkelig zueinander angeordneter Kabelkanalabschnitte vorgesehen ist.

7. Kabelkanal nach einem der vorhergehenden Ansprüche, **dadurch gekennzeichnet, daß** das Eckstück (37) einen im montierten Zustand senkrecht stehendun Eckkörper (38) mit zwei vorderseitigen, winkelig zueinander angeordneten Abdeckungen (39, 40) und einer oberen, winkeligen Abdeckplatte (41) aufweist und daß die vorderseitigen Abdeckungen (39, 40) im montierten Zustand endseitig die vorderen Randkanten benachbarter Kabelkanalabschnitte überdecken, während die obere Abdeckplatte (41) oberseitig benachbarte Kabelkanalabschnitte überdeckt.

8. Kabelkanal nach einem der vorhergehenden Ansprüche, **dadurch gekennzeichnet, daß** am Eckkörper (38) wenigstens ein Schenkel (42, 43, 44) zum Eingreifen in einen Kabelkanalabschnitt und zum Halten des Eckstücks (37) am Kabelkanalabschnitt vorgesehen ist.

9. Kabelkanal nach einem der vorhergehenden Ansprüche, **dadurch gekennzeichnet, daß** die Abdeckplatte (41) und der Eckkörper (38) über eine Sollbruchstelle (45) miteinander verbunden sind und daß, vorzugsweise, an dem einen Abdeckbereich (46) der Abdeckplatte (41) unterseitig ein durch die Unterseite der Abdeckplatte (41) und einen unteren Schenkel (48) gebildeter Schlitz (47) zur Aufnahme des Endes des Deckels (5) vorgesehen ist, während der andere Abdeckbereich (49) schlitzfrei ausgebildet ist.

## Claims

1. Cable duct (1) for wall mounting with a cable acceptance region (2) and a lower terminating section (3) for arranging on a floor for covering outer edges of floorings, wherein the cable acceptance region (2) comprises in a mounted state on the wall a cable acceptance housing (4) and a removal cover (5), wherein in a demounted condition of the cover access is provided to the interior (6) of the cable acceptance housing (4), and wherein the lower terminating section (3) is hard connected to the cable acceptance housing (4), so the lower terminating section (3) remains even when the cover (5) is removed in a mounted state of the cable duct (1) in a fixed arrangement to the floor, **characterized in, that** an at least essentially L shaped clip (27) is dedicated for wall mounting of the cable duct, that the clip comprises at its upper end a bent off the wall section (30), that backwards of the cable acceptance region (4) an arm receiver for receiving the section (30) is provided, that underneath the cable acceptance housing (4) an essentially horizontally, backwards open section (31) for receiving the horizontally arm (29) of the clip (27) is provided and that the clip comprises at the horizontally arm (29) a spring projection (33).

2. Cable duct as claimed in claim 1, **characterized in, that** in the receiver (32) a corresponding catch projection (34) is provided.

3. Cable duct as claimed in claim 1 or 2, **characterized in, that** above the receiver (32) a backward projecting arm (36) is provided and that between the arm (36) and the upper arm receiver (31) a cement acceptance region (35) is formed.

4. Cable duct as claimed in the preceding claims, **characterized in, that** the lower terminating section (3) comprises a sealing lip (22) and that, preferably, the lower terminating section (3) provides a lengthwise running groove (23) for insertion of a retaining section (24) of the sealing lip (22).

5. Cable duct as claimed in the preceding claims, **characterized in, that** the region behind the lower terminating section (3) is separated from the interior (6) and that this region generates a further cable acceptance space (6a).

6. Cable duct as claimed in the preceding claims, **characterized in, that** at least one preferable multi-part corner piece (37) to connect the cable duct sections arranged at an angle together is provided.

7. Cable duct as claimed in the preceding claims, **characterized in, that** the corner piece (37) comprises an in a mounted state vertically corner body (38) with two frontsided, angled together covers (39,40) and an upper, angled cover plate (41) and that the front sided covers (39,40) overlap in a mounted state at the end the forward edges of adjacent cable duct sections, while the upper cover plate (41) on the top overlaps the adjacent cable duct sections.

8. Cable duct as claimed in the preceding claims, **characterized in, that** at the corner body (38) at least one arm (42,43,44) is provided for engaging a cable duct section and for holding the corner piece (37) on a cable duct section.

9. Cable duct as claimed in the preceding claims, **characterized in, that** the cover plate (41) and the corner body (38) are connected via a rated break point (45) with each other and that on the bottom of one cover region (46) of one cover plate (41) an accumulated slot (47) is formed by the bottom of the cover plate (41) and the lower arm (48) is provided for receiving the end of the cover (5), while the other cover region (49) is formed slot free.

## Revendications

1. Conduit de câbles (1) pour montage mural, comprenant une zone de logement de câbles (2) et une partie terminale inférieure (3) à disposer sur le fond pour recouvrir des bords périphériques de revêtements de sol, dans lequel la zone de logement de câbles (2) présente un boîtier de logement de câbles (4), fixé au mur à l'état monté, et un couvercle amovible (5), l'accès à l'intérieur (6) du boîtier de logement de câbles (4) étant donné à l'état retiré du couvercle, et dans lequel la partie terminale inférieure (3) est solidaire du boîtier de logement de câbles (4) de sorte que la partie terminale inférieure (3) reste disposée solidement par rapport au fond, même lorsque le couvercle (5) est retiré, à l'état monté du conduit de câbles (1), **caractérisé en ce que** le conduit de câbles (1) se voit attribuer au moins une attache de montage mural, réalisée substantiellement en forme de L, **en ce que** l'attache présente à son extrémité supérieure une partie (30) dégagée du mur, **en ce que** sur la face arrière sur le boîtier de logement de câbles, un logement de branche correspondant pour la partie (30) est prévu, **en ce qu'**au-dessous de la zone de logement de câbles (4) est prévu un logement (31) substantiellement horizontal, ouvert sur la face arrière, pour la branche horizontale (29) de l'attache, et **en ce que** l'attache présente au niveau de la branche horizontale (29) une saillie faisant ressort (33),

2. Conduit de câbles selon la revendication 1, **caractérisé en ce que** dans le logement (32), une saillie d'arrêt (34) correspondante est prévue.

3. Conduit de câbles selon la revendication 1 ou 2, **caractérisé en ce qu'**au-dessus du logement (32), une branche (36) s'écartant vers l'arrière est prévue, et **en ce qu'**entre la branche (36) et le logement de branche supérieur (31), une zone de logement d'un adhésif (35) est réalisée.

4. Conduit de câbles selon l'une quelconque des revendications précédentes, **caractérisé en ce que** la partie de butée inférieure (3) présente une lèvre d'étanchéité (22), et **en ce que** de préférence la partie de butée inférieure (3) présente une rainure (23) s'étendant longitudinalement, pour l'insertion d'une partie de retenue (24) de la lèvre d'étanchéité (22).

5. Conduit de câbles selon l'une quelconque des revendications précédentes, **caractérisé en ce que** la zone derrière la partie de butée (3) est séparée de l'intérieur (6), et **en ce que** cette zone forme un autre espace de logement de câbles (6a) supplémentaire.

6. Conduit de câbles selon l'une quelconque des revendications précédentes, **caractérisé en ce qu'**au moins une pièce d'angle (37), de préférence en plusieurs parties, est prévue pour relier des parties de conduit de câbles disposées sous des angles les unes par rapport aux autres.

7. Conduit de câbles selon l'une quelconque des revendications précédentes, **caractérisé en ce que** la pièce d'angle (37) présente un corps d'angle (38), posé verticalement à l'état monté, avec deux recouvrements (39, 40) sur la face avant, disposés sous un angle l'un par rapport à l'autre, et avec une plaque de recouvrement angulaire supérieure (41), et **en ce que** les recouvrements (39, 40) sur la face avant recouvrent à l'état monté côté extrémité les bords périphériques avant de parties de conduit de câbles adjacentes, pendant que la plaque de recouvrement supérieure (41) recouvre des parties de canal de câbles adjacentes sur la face supérieure.

8. Conduit de câbles selon l'une quelconque des revendications précédentes, **caractérisé en ce que** sur le corps d'angle (38), au moins une branche (42, 43, 44) est prévue pour s'engager dans une partie de conduit de câbles et pour retenir la pièce d'angle (37) sur la partie de conduit de câbles.

9. Conduit de câbles selon l'une quelconque des revendications précédentes, **caractérisé en ce que** la plaque de recouvrement (41) et le corps d'angle (38) sont reliés ensemble par un point destiné à la rupture (45), et **en ce que** de préférence sur une zone de recouvrement (46) de la plaque de recouvrement (41), sur la face inférieure, une fente (47) formée par la face inférieure de la plaque de recouvrement (41) et une branche inférieure (48) est prévue pour recevoir l'extrémité du couvercle (5) alors que l'autre zone de recouvrement (49) est réalisée sans fente.
